# EUROPÄISCHE PATENTSCHRIFT

(11) **EP 4 337 487 B1**
(45) Veröffentlichungstag und Bekanntmachung des Hinweises auf die Patenterteilung: **02.07.2025**
(21) Anmeldenummer: 22708483.7
(22) Anmeldetag: 10.02.2022
(51) Int. Cl.: B60K 35/23, B60K 35/28, B60K 35/29, B60K 35/60, B60K 35/90, G02B 27/00, G02B 27/01

(54) **VERFAHREN UND VORRICHTUNG ZUM BETREIBEN EINES FRONTSCHEIBEN-ANZEIGESYSTEMS MIT EINER ABDECKERKENNUNG SOWIE FRONTSCHEIBEN-ANZEIGESYSTEM**
METHOD AND DEVICE FOR OPERATING A WINDSHIELD DISPLAY SYSTEM WITH A COVERED DISPLAY DETECTION, AND WINDSHIELD DISPLAY SYSTEM
PROCÉDÉ ET DISPOSITIF POUR FAIRE FONCTIONNER UN SYSTÈME D'AFFICHAGE DE PARE-BRISE À DÉTECTION D'AFFICHAGE COUVERTE, ET SYSTÈME D'AFFICHAGE DE PARE-BRISE

(30) Priorität: 10.05.2021 DE 102021112096
(43) Veröffentlichungstag der Anmeldung: 20.03.2024
(73) Patentinhaber: Bayerische Motoren Werke Aktiengesellschaft, 80809 München (DE)
(72) Erfinder: RÖLLE, Christopher, 82194 Gröbenzell (DE); HEJDA, Tomas, 85375 Neufahrn (DE); KRATZ, Sadzida, 80809 München (DE)
(86) Internationale Anmeldenummer: PCT/EP2022/053218
(87) Internationale Veröffentlichungsnummer: WO 2022/238019

(56) Entgegenhaltungen:
- WO-A1-2020/189646
- US-A1- 2014 333 647
- US-A1- 2019 212 550
- US-A1- 2019 271 905

## Beschreibung

### Technisches Gebiet

Die Erfindung betrifft Frontscheiben-Anzeigesysteme, insbesondere Reflexionsanzeigesysteme, wie beispielsweise PHUD, für Kraftfahrzeuge. Insbesondere betrifft die vorliegende Erfindung Maßnahmen zur Erkennung eines im optischen Strahlenverlauf des Frontscheiben-Anzeigesystems befindlichen Fremdobjekts.

### Technischer Hintergrund

Reflexionsanzeigesysteme, wie beispielsweise PHUD, umfassen eine auf der Oberseite der Instrumententafel angeordnete Anzeigeeinheit, deren Anzeige sich auf der Innenseite der Frontscheibe spiegelt, so dass das Reflexionsbild von einem Fahrzeuginsassen wahrgenommen werden kann. Die Anzeigeeinheit ist dabei etwas vertieft auf der Oberseite der Instrumententafel angeordnet, so dass eine direkte Einsicht auf die Anzeigefläche der Anzeigeeinheit unterbunden wird, um so eine Blendung des Benutzers durch direkt ins Auge einfallendes Licht zu vermeiden.

Durch die Anordnung der Anzeigeeinheit in einer solchen Vertiefung auf der Oberseite der Instrumententafel sind jedoch auch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell gesetzlich relevante Anzeigesymbole, wie beispielsweise Geschwindigkeitsanzeige, Kammerleuchten, Restreichweite und dergleichen nicht sichtbar sind, aber auch das Fehlen dieser Anzeigesymbole nicht bemerkt wird, da diese nicht dauerhaft angezeigt werden.

Eine Nutzung eines Deckglases, wie es beispielsweise bei klassischen Head-up-Display-Anzeigen verwendet wird, ist bei derartigen Reflexionsanzeigevorrichtungen nachteilig, da dadurch neue Spiegelungen von Umgebungslicht auf die Windschutzscheibe entstehen können, die bei hoher Umgebungshelligkeit die Wahrnehmbarkeit des Reflexionsbildes erheblich beeinträchtigen.

Die Druckschrift US 2014/333647 A1 offenbart ein Head-up-Anzeigesystem für ein Fahrzeug, wobei das Anzeigesystem eine transparente Anzeige, die zwischen einem Fahrersitz und einer Fahrzeugwindschutzscheibe angeordnet ist; eine Anzeigemodus-Einstelleinheit, die so konfiguriert ist, dass sie einen Anzeigemodus der transparenten Anzeige als mindestens einen von einem ersten Modus oder einem zweiten Modus mindestens teilweise auf der Grundlage eines zwischen der transparenten Anzeige und einer Fahrzeugkarosserie gebildeten Winkels einstellt; und eine Bildeinstellungseinheit umfasst, um das auf der transparenten Anzeige angezeigte Bild entsprechend dem Anzeigemodus einzustellen.

Die Druckschrift US 2019/271905 A1 offenbart eine Projektionsanzeigevorrichtung mit einer Projektionsanzeigeeinheit, die eine Lichtmodulationseinheit enthält, die von einer Lichtquelle emittiertes Licht auf der Grundlage eingegebener Bildinformationen räumlich moduliert und als Ergebnis der räumlichen Modulation erhaltenes Bildlicht auf eine Projektionsfläche eines Fahrzeugs projiziert, um ein Bild auf der Grundlage des Bildlichts anzuzeigen. Eine Abdeckung deckt einen Öffnungsabschnitt ab, durch den das Bildlicht austritt. Mithilfe eines Objektentfernungsmechanismus wird ein Objekt, das an einer vorderen Oberfläche der Abdeckung haftet, durch Kratzen der vorderen Oberfläche der Abdeckung entfernt. Es ist eine Objektentfernungssteuereinheit vorgesehen, die einen Betrieb des Objektentfernungsmechanismus aktiviert, wenn ein vorbestimmter Anzeigeinhalt in einem Teil des Bildlichts enthalten ist, wobei der Teil aufgrund des von der Bereichserfassungseinheit erfassten Objektanhaftungsbereichs blockiert ist.

Die Druckschrift WO 2020/189646 A1 offenbart ein Head-up-Display, das ein vorbestimmtes Bild in Richtung der Insassen des Fahrzeugs anzeigt, wobei das Gehäuse eine Öffnung und eine transparente Abdeckung, die die Öffnung des Gehäuses abdeckt, aufweist. Eine Bilderzeugungseinheit, die Licht zum Erzeugen des vorbestimmten Bildes emittiert, ist innerhalb eines durch die transparente Abdeckung gebildeten Aufnahmeabschnitts vorgesehen, und das von der Bilderzeugungseinheit emittierte Licht wird auf die Windschutzscheibe gerichtet.

Die Druckschrift US 2019/212550 A1 offenbart eine Projektionsanzeigevorrichtung mit einer Lichtmodulationseinheit, die in Übereinstimmung mit eingegebenen Bilddaten das von einer Lichtquelle emittierte Licht räumlich moduliert, mit einem optischen Projektionssystem, das das räumlich modulierte Licht, durch einen Öffnungsabschnitt eines Gehäuses auf eine Projektionsfläche eines Fahrzeugs projiziert. Eine Abdeckung verschließt den Öffnungsabschnitt und ein bewegliches Trennelement unterteilt eine vordere Oberfläche der Abdeckung in eine Vielzahl von Bereichen. Das Trennelement wird in eine Position auf der Abdeckung bewegt, so dass die Abdeckung in eine Vielzahl von Bereichen getrennt wird, wenn ein Objekt erfasst wird.

Es ist Aufgabe der vorliegenden Erfindung, ein verbessertes Verfahren zur Detektion von Verdeckungen eines Anzeigebildes bei einem Reflexionsanzeigesystem zur Verfügung zu stellen.

### Offenbarung der Erfindung

Diese Aufgabe wird durch ein Reflexionsanzeigesystem gemäß Anspruch 1 sowie durch ein Verfahren zur eine Erkennungsvorrichtung und ein Anzeigesystem gemäß den nebengeordneten Ansprüchen gelöst.

Weitere Ausgestaltungen sind in den abhängigen Ansprüchen angegeben.

Gemäß einem ersten Aspekt ist ein Reflexionsanzeigesystem zur Anzeige eines Anzeigebilds für einen Fahrzeuginsassen eines Kraftfahrzeugs durch Reflexion des Anzeigebilds an einer Frontscheibe vorgesehen, umfassend:
- eine Anzeigeeinheit, die ausgebildet ist, um das Anzeigebild der Anzeigefläche anzuzeigen;
- eine Erkennungssensorik zur Erfassung des angezeigten Anzeigebilds auf der Anzeigefläche; und
- eine Steuereinheit, die ausgebildet ist, um
   ∘ die Anzeigeeinheit zur Anzeige anzusteuern;
   ∘ eine Erfassungsinformation abhängig von dem erfassten angezeigten Anzeigebild zu ermitteln,
   ∘ das Vorhandensein eines Fremdobjekts auf der Anzeigefläche der Anzeigeeinheit abhängig von dem angezeigten Anzeigebild und abhängig von der Erfassungsinformation festzustellen; und
   ∘ eine Störung der Anzeige zu signalisieren, wenn das Vorhandensein eines Fremdobjekts auf der Anzeigefläche der Anzeigeeinheit festgestellt wird.

Fremdobjekte, die auf der Instrumententafel abgelegt werden, können Komponenten zur Darstellung von Informationen über die Frontscheibe ganz oder teilweise verdecken. Wird das Reflexionsanzeigesystem zur Darstellung von sicherheitsrelevanten Informationen genutzt, ist es jedoch notwendig, eine Nichtanzeige einer Information von einer Blockierung der Anzeige der Information durch ein aufliegendes Fremdobjekt unterscheiden zu können.

Fremdobjekte im Sinne dieser Erfindung können beliebige Gegenstände sein, die die Wahrnehmung eines Anzeigebilds behindern, wie z.B. Kleidungsstücke, Papiere und dergleichen.

Insbesondere, wenn die Anzeigeeinheit in einer Vertiefung auf der Oberseite der Instrumententafel angeordnet ist, sind jedoch Fremdobjekte, die auf der Anzeigeeinheit aufliegen, nicht ohne Weiteres von der normalen Augenposition der Fahrzeuginsassen sichtbar. Diese Fremdobjekte liegen jedoch im Strahlengang des Anzeigebilds und können so Teile der Anzeige verdecken, so dass eventuell sicherheitsrelevante und gesetzlich vorgeschriebene Anzeigesymbole, wie beispielsweise Geschwindigkeitsanzeige, Kammerleuchten, Restreichweite und dergleichen nicht sichtbar sind. Jedoch kann nicht ohne Weiteres das Fehlen dieser Anzeigesymbole bemerkt werden, da diese nicht dauerhaft angezeigt werden.

Mithilfe des obigen Reflexionsanzeigesystems ist es möglich, zu erkennen, ob auf der Anzeigefläche der Anzeigeeinheit frei von aufliegenden Fremdobjekten ist. Dies wird dadurch erreicht, dass eine Erfassungsinformation abhängig von dem erfassten angezeigten Anzeigebild ermittelt und das Vorhandensein des Fremdobjekts auf der Anzeigefläche der Anzeigeeinheit durch Vergleichen des angezeigten Anzeigebilds und der Erfassungsinformation festgestellt wird.

Dadurch kann detektiert werden, ob der Strahlengang des Reflexionsanzeigesystems durch ein Fremdobjekt auf der Anzeigefläche gestört ist. Eine Erkennung einer solchen Unterbrechung der Anzeige des Reflexionsanzeigesystems ist wesentlich, um eine Warnung oder sonstige Gegenmaßnahmen signalisieren zu können. Das obige Reflexionsanzeigesystem ermöglicht somit eine automatisierte Erkennung eines das Anzeigebild störenden Fremdobjekts auf der Anzeigefläche der Anzeigeeinheit.

Weiterhin kann die Anzeigeeinheit so in der Vertiefung angeordnet sein, dass das Anzeigebild nicht direkt in dem Augenbereich wahrnehmbar ist.

Weiterhin kann die Steuereinheit ausgebildet sein, um die Anzeigeeinheit zur Ausgabe eines Testbilds mit einer Anzeigeeigenschaft anzusteuern, als Erfassungsinformation ein Erfassungsbild des Testbilds zu erfassen und das Vorliegen der Anzeigeeigenschaft anhand des Erfassungsbilds zu überprüfen, um eine Störung der Anzeige zu signalisieren, wenn die Anzeigeeigenschaft bezüglich des Erfassungsbilds nicht vorliegt.

Insbesondere kann das Testbild einer Anzeige mit einer unterschiedlichen Anzeigeinformation als das Anzeigebild und/oder einem Bild mit einer unterschiedlichen Anzeigeeigenschaft als das Anzeigebild, insbesondere der gesamten Helligkeit des Bildes, entsprechen.

Eine Idee der obigen Reflexionsanzeigesystem besteht darin, die Erkennungssensorik dafür zu nutzen, bestimmte Eigenschaften des Anzeigebilds auszuwerten. Diese Anzeigeeigenschaft wird durch ein das Anzeigebild verdeckendes Fremdobjekt verändert, so dass durch Abweichung von der Erfassung der Erkennungssensorik von einer erwarteten Erfassung auf das Vorliegen eines Fremdobjekts geschlossen werden kann.

Gemäß einer Ausführungsform kann die Erkennungssensorik eine Bilderfassungssensorik aufweisen, die ausgebildet ist, um die Anzeige der Anzeigefläche direkt oder indirekt über eine oder mehrere Reflexionen zu erfassen, wobei die Anzeige der Anzeigefläche indirekt über einen weiteren Reflexionsbereich an der Frontscheibe oder über eine Reflexion im Auge eines Fahrzeuginsassen erfasst wird.

Insbesondere kann die Anzeigeeigenschaft eine periodische Anzeige eines Testbilds für eine nicht wahrnehmbare Zeitdauer auf der Anzeigefläche umfassen, wobei die Steuereinheit ausgebildet ist, als Erfassungsbild die Anzeige des Testbilds zu ermitteln, und das Vorhandensein des Fremdobjekts auf der Anzeigefläche durch Vergleichen des Erfassungsbilds mit dem Testbild zu bestimmen.

Es kann vorgesehen sein, dass die Anzeigeeigenschaft eine Anzeige eines Testbildes in einem nicht sichtbaren Licht umfasst, wobei die Steuereinheit ausgebildet ist, als Erfassungsbild die Anzeige des Testbilds in dem nicht sichtbaren Licht zu ermitteln und das Vorhandensein des Fremdobjekts auf der Anzeigefläche durch Vergleichen des Erfassungsbilds mit dem Testbild zu bestimmen.

Weiterhin kann die Erkennungssensorik einen Helligkeitssensor umfassen, der ausgebildet ist, um eine gesamte Helligkeit des Anzeigebilds direkt oder indirekt über eine oder mehrere Reflexionen als Erfassungshelligkeit zu erfassen, wobei die Steuereinheit ausgebildet ist, um das Vorhandensein des Fremdobjekt auf der Anzeigefläche abhängig von der Erfassungshelligkeit und einer Referenzhelligkeit zu ermitteln.

Insbesondere kann die Referenzhelligkeit als die gesamte Helligkeit des anzuzeigenden Anzeigebilds ermittelt werden.

Gemäß einem weiteren Aspekt ist ein Kraftfahrzeug vorgesehen, umfassend:
- eine Instrumententafel zwischen einer Frontscheibe des Kraftfahrzeugs und einer Lenksäule;
- das obige Reflexionsanzeigesystem.

Gemäß einem weiteren Aspekt ist ein Verfahren zum Erkennen eines Fremdobjekts auf einer Anzeigeeinheit eines Reflexionsanzeigesystems, die eine Reflexion eines Anzeigebilds an einer Frontscheibe in einen Augenbereich eines Fahrzeuginsassen bewirkt, mit folgenden Schritten:
- Anzeigen des Anzeigebilds auf der Anzeigefläche;
- Erfassen des angezeigten Anzeigebilds auf der Anzeigefläche durch eine Erkennungssensorik;
- Ermitteln einer Erfassungsinformation abhängig von dem erfassten angezeigten Anzeigebild,
- Feststellen des Vorhandenseins eines Fremdobjekts auf der Anzeigefläche der Anzeigeeinheit abhängig von dem angezeigten Anzeigebild und abhängig von der Erfassungsinformation; und
- Signalisieren einer Störung der Anzeige, wenn das Vorhandensein eines Fremdobjekts auf der Anzeigefläche der Anzeigeeinheit festgestellt wird.

### Kurzbeschreibung der Zeichnung

Ausführungsformen werden nachfolgend anhand der beigefügten Zeichnungen näher erläutert. Es zeigen:
- Figur 1: eine schematische Querschnittsdarstellung eines Reflexionsanzeigesystems in einem Kraftfahrzeug mit einer Lichtschranke als Erkennungssensorik;
- Figur 2: eine Querschnittsdarstellung eines Reflexionsanzeigesystems mit einer über einen weiteren Reflexionsbereich auf die Anzeigefläche gerichteten Erkennungssensorik zur Auswertung einer Anzeigeeigenschaft des angezeigten Anzeigebilds;
- Figur 3: ein Flussdiagramm zur Veranschaulichung eines Verfahrens zum Betreiben des Reflexionsanzeigesystems.

### Beschreibung von Ausführungsformen

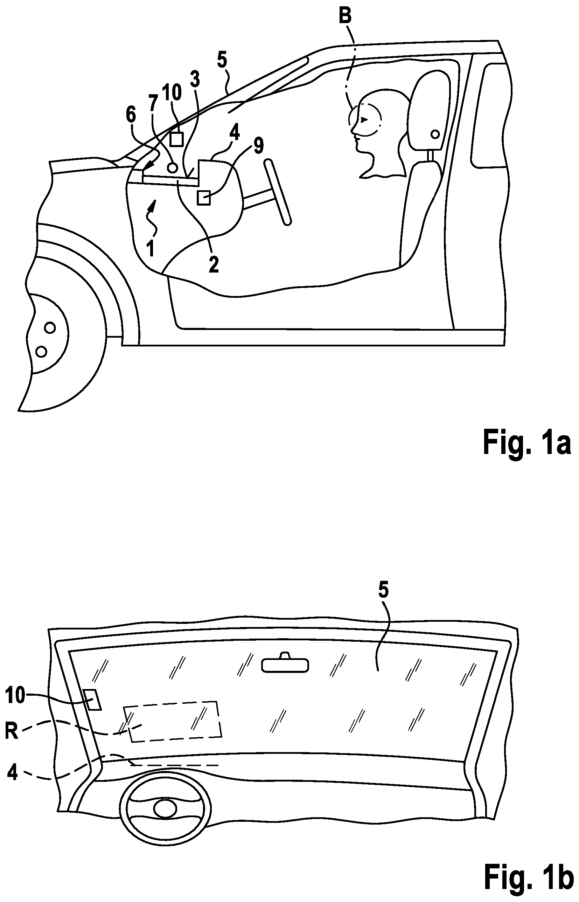

Figuren 1a und 1b zeigen eine schematische Querschnittsdarstellung durch ein Kraftfahrzeug mit einem Reflexionsanzeigesystem 1 und eine Darstellung aus dem Blickwinkel des Fahrers des Kraftfahrzeugs. Das Reflexionsanzeigesystem ist an einer Oberseite einer Instrumententafel 4 angeordnet und weist eine Anzeigeeinheit 2 auf, die eine Anzeigefläche 3 zur Darstellung eines Anzeigebilds umfasst. Die Anzeigeeinheit 2 ist auf der Oberseite der Instrumententafel 4 unterhalb einer Frontscheibe 5, angeordnet.

Die Anzeigefläche 3 ist bezüglich der Frontscheibe 5 so ausgerichtet, dass ein auf der Anzeigefläche 3 der Anzeigeeinheit 2 angezeigtes Anzeigebild an einem unteren Bereich der Innenseite der Frontscheibe 5 reflektiert wird und durch einen Fahrzeuginsassen in einem Augenbereich B wahrgenommen werden kann. Dadurch kann die Ausrichtung der Anzeigeeinheit 2 bzw. dessen Anzeigefläche vorzugsweise im Wesentlichen parallel zur Fahrzeuglängs- und Querachse sein oder von diesen um einen Winkel von z.B. nicht mehr als 0-20° abweichen.

Die Anzeigeeinheit 2 kann durch eine Steuereinheit 9 angesteuert werden, um eine gewünschtes Anzeigebild auszugeben, das von dem Fahrzeuginsassen wahrgenommen werden soll.

Die Anzeigeeinheit 2 kann in einer Vertiefung 6 der Instrumententafel angebracht sein, so dass vom Fahrzeuginsassen kein direkter Blick auf die Anzeigefläche 3 der Anzeigeeinheit 2 möglich ist und ein Blenden der Fahrzeuginsassen durch direktes Licht von der Anzeigefläche 3 in den Augenbereich B vermieden wird. Weiterhin ist die Anzeigefläche 3 der Anzeigeeinheit 2 so ausgerichtet, dass ein angezeigtes Anzeigebild an der Innenseite der Frontscheibe 5 reflektiert wird und von einem Fahrzeuginsassen in einem Augenbereich B als Reflexionsbild in einem Reflexionsbereich R auf der Frontscheibe 5 wahrgenommen werden kann.

Die Anzeigeeinheit 2 kann als licht-emittierende Anzeigeeinheit 2 ausgebildet sein und kann vorzugsweise als LCD-Anzeigeeinheit mit einem Backlight hoher Helligkeit oder als Mikro-LED-Anzeigeeinheit ausgebildet sein, um ein leuchtstarkes Anzeigebild bereitzustellen, so dass das erzeugte Reflexionsbild auch bei hoher Umgebungshelligkeit über den entsprechenden Bereich der Frontscheibe 5 wahrgenommen werden kann.

Da die Anzeigeeinheit 2 in der Vertiefung 6 an der Oberseite der Instrumententafel 4 angeordnet ist, kann auch ein Fremdobjekt 7 in diese Vertiefung gelangen und damit auf der Anzeigefläche 3 der Anzeigeeinheit 2 zu liegen kommen. Ein auf der Anzeigeeinheit 2 angezeigtes Anzeigebild kann dann nicht oder nur teilweise als Reflexionsbild durch einen Fahrzeuginsassen wahrgenommen werden.

Zur Erkennung, ob das Fremdobjekt 7 auf der Anzeigefläche 3 aufliegt oder nicht, ist eine Erkennungssensorik 10 vorgesehen, die in den Figuren 1a und 1b zunächst schematisch angegeben ist. Die Erkennungssensorik 10 kann ein oder mehrere Kamerasysteme oder einen oder mehrere Helligkeitssensoren umfassen und diese gegebenenfalls kombinieren, um ein auf der Anzeigefläche 3 aufliegendes Fremdobjekt 7 zu erkennen.

Die Erkennungssensorik 10 steht mit der Steuereinheit 9 in Kommunikationsverbindung, die bei einem Erkennen des Fremdobjekts 7 das Blockieren der Anzeige durch das Fremdobjekt 7 in geeigneter Weise dem Fahrzeuginsassen, insbesondere dem Fahrer des Kraftfahrzeugs, signalisiert beispielsweise durch ein akustisches oder visuelles Warnsignal. Das visuelle Warnsignal kann über eine separate Ausgabeeinheit oder über die Anzeigeeinheit 2 ausgegeben werden. Im letzteren Fall kann beispielsweise das Warnsignal über die gesamte Anzeigefläche ausgegeben werden, damit die Fahrzeuginsassen trotz aufliegendem (das Anzeigebild teilweise verdeckenden) Fremdobjekt 7 das Warnsignal wahrnehmen können. Beispielsweise kann das Warnsignal als blinkende flächige Anzeige auf der Anzeigefläche 3 dargestellt werden.

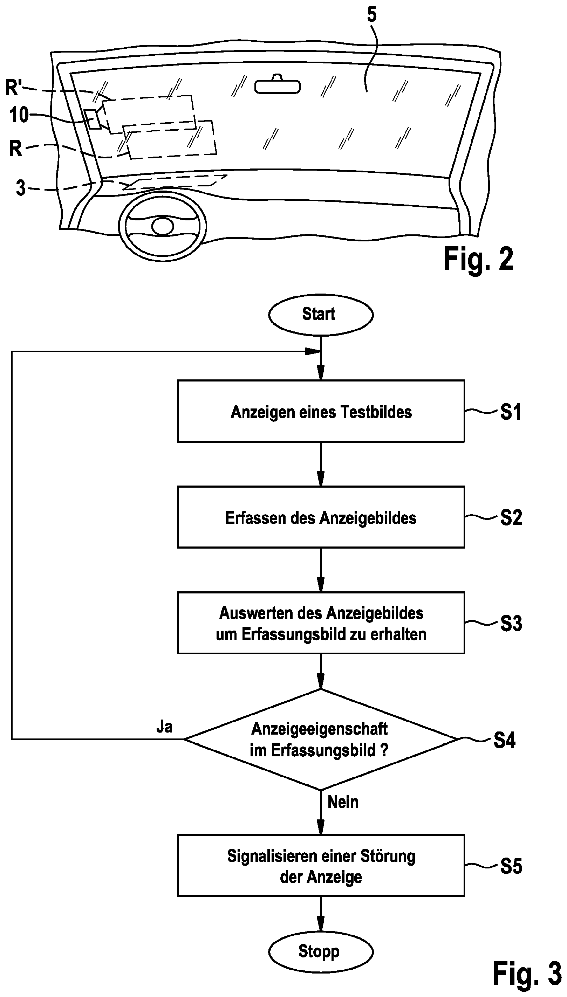

In Figur 2 ist eine Querschnittsdarstellung einer beispielhaften Ausführungsform dargestellt, bei der die Erkennungssensorik 10 eine Bilderfassungssensorik 10a umfasst. Die Bilderfassungssensorik 10a kann beispielsweise eine oder mehrere Kameras aufweisen, die direkt oder indirekt, d. h. Z.B. über einen entsprechenden Reflexionsbereich R' der Frontscheibe 5, der sich von dem Reflexionsbereich R unterscheiden kann, auf die Anzeigefläche 3 der Anzeigeeinheit 2 gerichtet ist. Dabei sollte die Bilderfassungssensorik 10a den gesamten Bereich des Anzeigebilds erfassen. Die Bilderfassungssensorik 10a ist dabei so angeordnet, dass diese sich nicht im Blickbereich des Fahrers und/oder der übrigen Fahrzeuginsassen und im Sichtbereich des Reflexionsbildes in dem Reflexionsbereich R befindet, so dass eine ungestörte Sicht des Fahrers und/oder der übrigen Fahrzeuginsassen möglich ist.

Insbesondere nicht den Strahlengang zwischen der Anzeigefläche 3, des Reflexionsbereichs auf der Frontscheibe 5 und den Augenbereich B unterbricht.

Zur Feststellung des Aufliegens eines Fremdobjekts 7 auf der Anzeigefläche 3 kann die Steuereinheit 9 die Anzeigeeinheit 2 ansteuern, um dem anzuzeigenden Anzeigebild eine zusätzliche Charakteristik als Anzeigeeigenschaft aufzuprägen. Die Steuereinheit 9 kann durch Auswerten eines von der Bilderfassungssensorik 10a erfassten Anzeigebilds ein Erfassungsbild erhalten und durch Überprüfen des Erfassungsbildes bezüglich der Anzeigeeigenschaft ein teilweises Verdecken des Anzeigebilds feststellen. Dabei wird das durch die Bilderfassungssensorik 10a erfasste Erfassungsbild dahingehend überprüft, ob es die Anzeigeeigenschaft der aufgeprägten zusätzlichen Charakteristik aufweist.

Die Steuereinheit 9 kann beispielsweise die Anzeigeeinheit 2 ansteuern, um periodisch das anzuzeigende Anzeigebild durch ein Testbild zu ersetzen oder zu überlagern, das so kurzzeitig angezeigt wird, dass es von dem menschlichen Auge nicht wahrnehmbar ist. Beispielsweise kann das Testbild für Zeitdauern zwischen 5ms und 40ms mit einer Wiederholfrequenz von z.B. 1Hz angezeigt werden. Entsprechend kann das Erfassungsbild der Bilderfassungssensorik 10a ausgewertet werden, um das periodisch angezeigte Testbild zu detektieren und als Erfassungsbild bereitzustellen. Ein Vergleich des Erfassungsbild mit dem angezeigten Testbild ermöglicht es in einfacher Weise, das Vorliegen eines Fremdobjekts 7 auf der Anzeigefläche 3 festzustellen. Insbesondere wenn festgestellt wird, dass das Erfassungsbild nicht vollständig dem angezeigten Testbild entspricht, kann von einer Störung der Anzeige des Reflexionsanzeigesystems 1 ausgegangen werden.

Alternativ kann das Testbild auch mit nicht sichtbarem Licht, insbesondere Infrarotlicht, angezeigt werden, so dass dieses sich dem anzuzeigenden Anzeigebild überlagert. Die periodisch intermittierende Anzeige des Testbilds ist dann nicht notwendig. Dazu muss die Bilderfassungssensorik 10a insbesondere für die Wellenlängen des nicht sichtbaren Lichts sensitiv ausgebildet sein.

Alternativ kann die Erkennungssensorik 10 auch einen Helligkeitssensor 10b aufweisen, der direkt oder indirekt auf das Anzeigebild der Anzeigefläche 3 gerichtet ist und eine gesamte Erfassungshelligkeit erfasst. Durch Auswerten der gesamten Erfassungshelligkeit mit einer zu erwartenden Referenzhelligkeit kann das Verdecken des Anzeigebilds durch ein Fremdobjekt 7 erkannt werden. Wird festgestellt, dass die gesamte Erfassungshelligkeit geringer ist als die zu erwartende Referenzhelligkeit, wird eine Störung der Anzeige durch die Anzeigeeinheit 2 festgestellt und entsprechend signalisiert.

Die Erfassungshelligkeit kann die Helligkeit des gesamten Anzeigebilds kontinuierlich erfassen und mit einer aus dem Anzeigebild ermittelten Referenzhelligkeit auswerten. Alternativ kann periodisch, wie oben beschrieben, ein Testbild ausgegeben werden, und die Erfassungshelligkeit lediglich bezüglich der Anzeige des Testbildes bestimmt werden. Die entsprechende Referenzhelligkeit ergibt sich dann aus der gesamten Helligkeit des Testbilds.

Die Referenzhelligkeit ergibt sich durch die Anzeige des angezeigten Bilds insbesondere als Summe der Helligkeiten der einzelnen Bildpunkte.

Um den Einfluss der Umgebungshelligkeit z.B. durch auf die Anzeigefläche einfallendes Sonnenlicht zu kompensieren, können im Fall der periodischen Darstellung des Testbildes und der Helligkeitsauswertung lediglich bezüglich des angezeigten Testbildes, zeitlich nacheinander zwei Testbilder mit verschiedenen gesamten Helligkeiten angezeigt werden. Durch Auswerten der Differenz der entsprechend durch den Helligkeitssensor 10b erfassten Erfassungshelligkeiten in Bezug auf eine Differenz der aus den Testbildern ermittelten oder diesen zugeordneten Referenzhelligkeiten kann der Einfluss der Umgebungshelligkeit herausgerechnet werden, da sich unter der Annahme, dass sich die Umgebungshelligkeit während der Erfassung der beiden Testbilder nicht ändert, der Helligkeitsunterschied zwischen den beiden Testanzeigebildern bei unverdeckter Anzeigefläche unabhängig von der Umgebungshelligkeit konstant bleiben muss.

In einer alternativen Ausführungsform kann die Erkennungssensorik 10 auf den Augenbereich B, insbesondere auf die Augen der Fahrzeuginsassen, gerichtet sein. In diesem Fall wird das Anzeigebild entsprechend den oben beschriebenen Verfahren ausgewertet. indirekt durch Reflexion an der Frontscheibe 5 und in den Augen des Fahrzeuginsassen bewertet. Bildpunkte des Testbildes, die über die Bilderfassungssensorik im Auge des Fahrzeuginsassen nicht reflektiert werden, werden als verdeckt erkannt und dadurch das Fremdobjekt 7 festgestellt.

Zur Feststellung des Aufliegens des Fremdobjekts 7 auf der Anzeigefläche 3 kann die Steuereinheit 9 die Anzeigeeinheit 2 ansteuern, um dem anzuzeigenden Anzeigebild eine zusätzliche Charakteristik als Anzeigeeigenschaft aufzuprägen. Die Steuereinheit 9 kann durch Auswerten eines von der Bilderfassungssensorik 10a erfassten Erfassungsbilds auf der Anzeigefläche 3 ein teilweises Verdecken des Anzeigebilds feststellen.

Die Anzeigeeigenschaft des Anzeigebilds kann eine periodische Anzeige einer Testbildfolge als eine Abfolge von mehreren Testbildern sein, die jeweils unterschiedliche Bildpunkte der Anzeigefläche 3 ansprechen. So kann beispielsweise eine periodisch erfolgende aufeinanderfolgende Aktivierung von einzelnen Bildpunkten oder Gruppen von Bildpunkten (z.B. Bildpunktsegmente) auf der Anzeigefläche 3 durchgeführt werden. So können beispielsweise Anzeigesegmente rasterartig zeitlich nacheinander aktiviert werden, so dass jeder der Bildpunkte bzw. jeder der Bereiche der Anzeigefläche 3 innerhalb der Testbildfolge einmal aktiviert wird.

Dies ermöglicht es, den Erkennungssensor 10 als einfachen Helligkeitssensor 10b auszubilden. Dieser wird betrieben, um durch entsprechendes Erfassen der Testbildfolge d. h. bei Erfassung zu den entsprechenden Anzeigezeitpunkten, eine Signalfolge zu generieren, die Helligkeiten der Testbilder der Testbildfolge nacheinander angibt. Durch Erkennen einer Signallücke mit reduzierter Helligkeit kann ein verdeckter Bereich auf der Anzeigefläche 3 bestimmt werden. Kann also zu einem vorgegebenen Anzeigezeitpunkt eines der Testbilder der Testbildfolge eine dem Testbild entsprechende Helligkeit nicht detektiert werden, so kann auf eine Verdeckung des entsprechenden Flächenbereichs geschlossen werden. Der Flächenbereich kann insbesondere abhängig von der zeitlichen Lage der Signallücke lokalisiert werden. Insbesondere kann durch die Lokalisation des Flächenbereichs auf den Bereich auf der Anzeigefläche, der durch das Fremdobjekt 7 verdeckt wird, geschlossen werden. Entsprechend kann eine Störung der Anzeige dann signalisiert werden, wenn zumindest ein bestimmter vordefinierter Teil des anzuzeigenden Anzeigebilds durch die Verdeckung beeinträchtigt wird.

In dem Flussdiagramm der Fig. 3 ist ein Verfahren zum Erkennen eines Fremdobjekts 7 dargestellt, das in der Steuereinheit 9 in Verbindung mit der Erkennungssensorik 10 und der Anzeigeeinheit 2 ausgeführt wird.

In Schritt S1 kann ein Testbild entsprechend einer bestimmten Anzeigeeigenschaft angezeigt werden. Die Anzeigeeigenschaft kann eine periodische Anzeige des Testbilds für einen Anzeigezeitraum entsprechen, der vorzugsweise ausreichend kurz ist, so dass dieser von einem Fahrzeuginsassen nicht wahrgenommen werden kann. Die Anzeigeeigenschaft kann auch eine bestimmte gesamte Helligkeit des Anzeigebilds bzw. eine gesamte Helligkeit in einem bestimmten Wellenlängenbereich vorsehen. Alternativ kann das Testbild auch eine Darstellung im nicht sichtbaren Wellenlängenbereich umfassen.

In Schritt S2 kann nun mithilfe der Erkennungssensorik 10 eine Erfassung des Anzeigebilds vorgenommen werden. Die Erfassung kann eine bildliche Erfassung, beispielsweise mithilfe der Bilderfassungssensorik 10a oder eine Helligkeitserfassung mithilfe des Helligkeitssensors 10b vorsehen. Dabei kann die Erfassung durch direktes Richten der Erkennungssensorik 10 auf die Anzeigefläche 3 durch indirektes Richten des Helligkeitssensors auf die Anzeigefläche 3 beispielsweise über den weiteren Reflexionsbereich R' auf der Frontscheibe 5 oder durch Richten der Erkennungssensorik 10 auf ein Auge eines Fahrzeuginsassen vorsehen.

In Schritt S3 wird das direkte oder indirekt erfasste Anzeigebild hinsichtlich der Anzeigeeigenschaft ausgewertet, um ein Erfassungsbild zu erhalten. Beispielsweise wird bei einer periodischen Anzeige eines Testbilds das Erfassungsbild als dasjenige Anzeigebild angenommen, dass zu dem Zeitpunkt der Ausgabe des Testbilds erfasst worden ist. Das Erfassungsbild kann auch einem in einem nicht sichtbaren Wellenlängenbereich erfasstes Anzeigebild entsprechen.

Alternativ kann eine Helligkeit des Anzeigebilds erfasst werden und diese zur Auswertung mit einer Referenzhelligkeit, die sich aus dem Anzeigebild ergibt, verglichen werden.

In Schritt S4 wird anhand des Erfassungsbilds oder der Erfassungshelligkeit in der Steuereinheit 9 überprüft, ob die der Anzeige der Anzeigeeinheit eingeprägte Anzeigeeigenschaft durch das Erfassungsbild bzw. die Erfassungshelligkeit vollständig bestätigt werden kann. Ist dies der Fall (Alternative: ja), so liegt keine Verdeckung der Anzeigefläche 3 vor und das Verfahren wird mit Schritt S1 fortgesetzt. Andernfalls (Alternative: Nein) wird das Verfahren mit Schritt S5 fortgesetzt.

In Schritt S5 kann eine Störung der Anzeige bzw. eine Verdeckung der Anzeigefläche entsprechend signalisiert werden. Das Signalisieren kann mithilfe eines optischen oder akustischen Signals oder in sonstiger Weise erfolgen, die die Fahrzeuginsassen darauf aufmerksam macht, dass die Anzeige zumindest teilweise verdeckt ist.

Insbesondere kann in Schritt S4 überprüft werden, ob das Erfassungsbild oder eine Abfolge von Erfassungsbildern einem entsprechenden Testbild (bei gleichen Anzeige- und Erfassungszeitpunkten) Testbild bzw. einer Sequenz der Testbilder (bei jeweils gleichen Anzeige- und Erfassungszeitpunkten) entsprechen. Wird festgestellt, dass das Testbild oder die Sequenz von Testbildern dem Erfassungsbild bzw. der Abfolge von Erfassungsbildern entsprechen, so wird keine Verdeckung des Anzeigebilds festgestellt. Alternativ wird eine Verdeckung des Anzeigebildes festgestellt und eine entsprechende Störung der Anzeige durch das Reflexionsanzeigesystem 1 signalisiert.

Alternativ kann in Schritt S4 überprüft werden, ob die Erfassungshelligkeit eines Anzeigebilds bei einem Anzeigezeitpunkt einer Referenzhelligkeit des Anzeigebilds bei dem Anzeigezeitpunkt entspricht. Weicht die Erfassungshelligkeit von der Referenzhelligkeit ab, so kann auf eine zumindest teilweise Verdeckung der Anzeigefläche 3 geschlossen werden.

## Patentansprüche

1. Reflexionsanzeigesystem (1) zur Anzeige eines Anzeigebilds für einen Fahrzeuginsassen eines Kraftfahrzeugs durch Reflexion des Anzeigebilds an einer Frontscheibe (5), umfassend:
- eine Anzeigeeinheit (2), die ausgebildet ist, um das Anzeigebild auf einer Anzeigefläche (3) anzuzeigen;
- eine Erkennungssensorik (10, 10a, 10b) zur Erfassung des angezeigten Anzeigebilds auf der Anzeigefläche (3); und
- eine Steuereinheit (9), die ausgebildet ist, um
∘ die Anzeigeeinheit (2) zur Anzeige anzusteuern;
∘ eine Erfassungsinformation abhängig von dem erfassten angezeigten Anzeigebild zu ermitteln,
∘ das Vorhandensein eines Fremdobjekts (7) auf der Anzeigefläche (3) der Anzeigeeinheit (2) abhängig von dem angezeigten Anzeigebild und abhängig von der Erfassungsinformation festzustellen; und
∘ eine Störung der Anzeige zu signalisieren, wenn das Vorhandensein eines Fremdobjekts (7) auf der Anzeigefläche (3) der Anzeigeeinheit (2) festgestellt wird.

2. Reflexionsanzeigesystem (1) nach Anspruch 1, wobei die Anzeigeeinheit (2) so in einer Vertiefung (6) angeordnet ist, dass das Anzeigebild nicht direkt in einem Augenbereich (B) wahrnehmbar ist.

3. Reflexionsanzeigesystem (1) nach Anspruch 1 oder 2, wobei die Steuereinheit (9) ausgebildet ist, um die Anzeigeeinheit (2) zur Ausgabe eines Testbilds mit einer Anzeigeeigenschaft anzusteuern, als Erfassungsinformation ein Erfassungsbild des Testbilds zu erfassen und das Vorliegen der Anzeigeeigenschaft anhand des Erfassungsbilds zu überprüfen, um eine Störung der Anzeige zu signalisieren, wenn die Anzeigeeigenschaft bezüglich des Erfassungsbilds nicht vorliegt.

4. Reflexionsanzeigesystem (1) nach Anspruch 3, wobei das Testbild einer Anzeige mit einer unterschiedlichen Anzeigeinformation als das Anzeigebild und/oder einem Bild mit einer unterschiedlichen Anzeigeeigenschaft als das Anzeigebild, insbesondere der gesamten Helligkeit des Bildes, entspricht.

5. Reflexionsanzeigesystem (1) nach Anspruch 3 oder 4, wobei die Erkennungssensorik (10, 10a, 10b) eine Bilderfassungssensorik (10a) aufweist, die ausgebildet ist, um die Anzeige der Anzeigefläche (3) direkt oder indirekt über eine oder mehrere Reflexionen zu erfassen, wobei die Anzeige der Anzeigefläche (3) indirekt über einen weiteren Reflexionsbereich (R') an der Frontscheibe oder über eine Reflexion im Auge eines Fahrzeuginsassen erfasst wird.

6. Reflexionsanzeigesystem (1) nach Anspruch 5, wobei die Anzeigeeigenschaft eine periodische Anzeige eines Testbilds für eine nicht wahrnehmbare Zeitdauer auf der Anzeigefläche umfasst, wobei die Steuereinheit (9) ausgebildet ist, als Erfassungsbild die Anzeige des Testbilds zu ermitteln, und das Vorhandensein des Fremdobjekts (7) auf der Anzeigefläche (3) durch Vergleichen des Erfassungsbilds mit dem Testbild zu bestimmen.

7. Reflexionsanzeigesystem (1) nach einem der Ansprüche 3 bis 4, wobei die Anzeigeeigenschaft eine Anzeige eines Testbildes in einem nicht sichtbaren Licht umfasst, wobei die Steuereinheit (9) ausgebildet ist, als Erfassungsbild die Anzeige des Testbilds in dem nicht sichtbaren Licht zu ermitteln und das Vorhandensein des Fremdobjekts (7) auf der Anzeigefläche (3) durch Vergleichen des Erfassungsbilds mit dem Testbild zu bestimmen.

8. Reflexionsanzeigesystem (1) nach einem der Ansprüche 1 bis 4, wobei die Erkennungssensorik (10, 10a, 10b) einen Helligkeitssensor (10b) umfasst, der ausgebildet ist, um eine gesamte Helligkeit des Anzeigebilds direkt oder indirekt über eine oder mehrere Reflexionen als Erfassungshelligkeit zu erfassen, wobei die Steuereinheit (9) ausgebildet ist, um das Vorhandensein des Fremdobjekt (7) auf der Anzeigefläche (3) abhängig von der Erfassungshelligkeit und einer Referenzhelligkeit zu ermitteln.

9. Reflexionsanzeigesystem (1) nach Anspruch 8, wobei die Referenzhelligkeit als die gesamte Helligkeit des anzuzeigenden Anzeigebilds ermittelt wird.

10. Kraftfahrzeug umfassend:
- eine Instrumententafel (7) zwischen einer Frontscheibe (5) des Kraftfahrzeugs und einer Lenksäule;
- das Reflexionsanzeigesystem (1) nach einem der Ansprüche 1-9.

11. Verfahren zum Erkennen eines Fremdobjekts (7) auf einer Anzeigeeinheit (2) eines Reflexionsanzeigesystems (1), die eine Reflexion eines Anzeigebilds an einer Frontscheibe (5) in einen Augenbereich (B) eines Fahrzeuginsassen bewirkt, mit folgenden Schritten:
- Anzeigen (S1) des Anzeigebilds auf der Anzeigefläche (3);
- Erfassen (S2) des angezeigten Anzeigebilds auf der Anzeigefläche (3) durch eine Erkennungssensorik (10, 10a, 10b);
- Ermitteln (S3) einer Erfassungsinformation abhängig von dem erfassten angezeigten Anzeigebild,
- Feststellen (S4) des Vorhandenseins eines Fremdobjekts (7) auf der Anzeigefläche (3) der Anzeigeeinheit (2) abhängig von dem angezeigten Anzeigebild und abhängig von der Erfassungsinformation; und
- Signalisieren (S5) einer Störung der Anzeige, wenn das Vorhandensein eines Fremdobjekts (7) auf der Anzeigefläche (3) der Anzeigeeinheit (2) festgestellt wird.

## Claims

1. Reflection display system (1) for displaying a display image for a vehicle occupant of a motor vehicle by reflection of the display image on a windshield (5), comprising:
- a display unit (2), which is designed to display the display image on a display surface (3) of the display unit (2);
- a detection sensor system (10, 10a, 10b) for acquiring the displayed display image on the display surface (3) of the display unit (2), and
- a control unit (9), which is designed
∘ to activate the display unit (2) for display;
∘ to ascertain acquisition information depending on the acquired displayed display image,
∘ to establish the presence of a foreign object (7) on the display surface (3) of the display unit (2) depending on the displayed display image and depending on the acquisition information; and
∘ to signal a disturbance of the display if the presence of a foreign object (7) on the display surface (3) of the display unit (2) is established.

2. Reflection display system (1) according to Claim 1, wherein the display unit (2) is arranged in a depression (6) such that the display image is not perceptible directly in an eye region (B).

3. Reflection display system (1) according to Claim 1 or 2, wherein the control unit (9) is designed to activate the display unit (2) to output a test image having a display property, to acquire an acquisition image of the test image as acquisition information, and to check the presence of the display property on the basis of the acquisition image in order to signal a disturbance of the display if the display property is not present with respect to the acquisition image.

4. Reflection display system (1) according to Claim **3,** wherein the test image corresponds to a display having different display information than the display image and/or an image having a different display property than the display image, in particular the overall brightness of the image.

5. Reflection display system (1) according to Claim 3 or 4, wherein the detection sensor system (10, 10a, 10b) includes an image acquisition sensor system (10a), which is designed to acquire the display of the display surface (3) directly or indirectly via one or more reflections, wherein the display of the display surface (3) is acquired indirectly via a further reflection region (R') on the windshield or via a reflection in the eye of a vehicle occupant.

6. Reflection display system (1) according to Claim 5, wherein the display property comprises a periodic display of a test image for an imperceptible period of time on the display surface, wherein the control unit (9) is designed to ascertain the display of the test image as the acquisition image, and to determine the presence of the foreign object (7) on the display surface (3) by comparing the acquisition image to the test image.

7. Reflection display system (1) according to one of Claims 3 to 4, wherein the display property comprises a display of a test image in nonvisible light, wherein the control unit (9) is designed to ascertain the display of the test image in the nonvisible light as the acquisition image and to determine the presence of the foreign object (7) on the display surface (3) by comparing the acquisition image to the test image.

8. Reflection display system (1) according to one of Claims 1 to 4, wherein the detection sensor system (10, 10a, 10b) comprises a brightness sensor (10b), which is designed to acquire an overall brightness of the display image directly or indirectly via one or more reflections as the acquisition brightness, wherein the control unit (9) is designed to ascertain the presence of the foreign object (7) on the display surface (3) depending on the acquisition brightness and a reference brightness.

9. Reflection display system (1) according to Claim 8, wherein the reference brightness is ascertained as the overall brightness of the display image to be displayed.

10. Motor vehicle comprising:
- a dashboard (7) between a windshield (5) of the motor vehicle and a steering column;
- the reflection display system (1) according to any one of Claims 1-9.

11. Method for detecting a foreign object (7) on a display unit (2) of a reflection display system (1), which causes a reflection of a display image on a windshield (5) in an eye region (B) of a vehicle occupant, having the following steps:
- displaying (S1) the display image on the display surface (3);
- acquiring (S2) the displayed display image on the display surface (3) by way of a detection sensor system (10, 10a, 10b);
- ascertaining (S3) acquisition information depending on the acquired displayed display image,
- establishing (S4) the presence of a foreign object (7) on the display surface (3) of the display unit (2) depending on the displayed display image and depending on the acquisition information; and
- signaling (S5) a disturbance of the display if the presence of a foreign object (7) on the display surface (3) of the display unit (2) is established.

## Revendications

1. Système d'affichage par réflexion (1) destiné à afficher une image d'affichage destinée à un occupant d'un véhicule automobile par réflexion de l'image d'affichage sur un pare-brise (5), ledit système comprenant :
- une unité d'affichage (2) qui est conçue pour afficher l'image d'affichage sur une surface d'affichage (3) de l'unité d'affichage (2) ;
- un ensemble capteur de reconnaissance (10, 10a, 10b) destiné à détecter l'image d'affichage affichée sur la surface d'affichage (3) de l'unité d'affichage (2) et
- une unité de commande (9) qui est conçue pour
∘ commander l'unité d'affichage (2) afin d'effectuer l'affichage ;
∘ déterminer une information de détection en fonction de l'image d'affichage affichée détectée, ∘ déterminer la présence d'un objet étranger (7) sur la surface d'affichage (3) de l'unité d'affichage (2) en fonction de l'image d'affichage affichée et en fonction d l'information de détection ; et
∘ signaler un défaut de l'affichage si la présence d'un objet étranger (7) est détectée sur la surface d'affichage (3) de l'unité d'affichage (2).

2. Système d'affichage par réflexion (1) selon la revendication 1, l'unité d'affichage (2) étant disposée dans un évidement (6) de telle sorte que l'image d'affichage ne soit pas directement visible dans une zone oculaire (B).

3. Système d'affichage par réflexion (1) selon la revendication 1 ou 2, l'unité de commande (9) étant conçue pour commander l'unité d'affichage (2) afin de délivrer une image de test ayant une propriété d'affichage, détecter une image de détection de l'image de test en tant qu'information de détection et vérifier la présence de la propriété d'affichage en fonction de l'image de détection afin de signaler un défaut d'affichage si la propriété d'affichage n'est pas présente par rapport à l'image de détection.

4. Système d'affichage par réflexion (1) selon la revendication 3, l'image de test correspondant à un affichage ayant une information d'affichage différente de l'image d'affichage et/ou une image ayant une propriété d'affichage différente de l'image d'affichage, en particulier la luminosité totale de l'image.

5. Système d'affichage par réflexion (1) selon la revendication 3 ou 4, l'ensemble capteur de reconnaissance (10, 10a, 10b) comprenant un ensemble capteur de détection d'image (10a) qui est conçu pour détecter l'affichage de la surface d'affichage (3) directement ou indirectement par le biais d'une ou plusieurs réflexions, l'affichage de la surface d'affichage (3) étant détecté indirectement par le biais d'une autre zone de réflexion (R') sur le pare-brise ou par le biais d'une réflexion dans l'œil d'un occupant du véhicule.

6. Système d'affichage par réflexion (1) selon la revendication 5, la propriété d'affichage comprenant un affichage périodique d'une image de test pendant une durée imperceptible sur la surface d'affichage, l'unité de commande (9) étant conçue pour déterminer l'affichage de l'image de test en tant qu'image de détection et pour déterminer la présence de l'objet étranger (7) sur la surface d'affichage (3) en comparant l'image de détection à l'image de test.

7. Système d'affichage par réflexion (1) selon l'une des revendications 3 à 4, la propriété d'affichage comprenant l'affichage d'une image de test dans une lumière non visible, l'unité de commande (9) étant conçue pour déterminer l'affichage de l'image de test dans la lumière non visible en tant qu'image de détection et pour déterminer la présence de l'objet étranger (7) sur la surface d'affichage (3) en comparant l'image de détection à l'image de test.

8. Système d'affichage par réflexion (1) selon l'une des revendications 1 à 4, l'ensemble capteur de reconnaissance (10, 10a, 10b) comprenant un capteur de luminosité (10b) qui est conçu pour détecter une luminosité totale de l'image d'affichage directement ou indirectement par le biais d'une ou plusieurs réflexions en tant que luminosité de détection, l'unité de commande (9) étant conçue pour déterminer la présence de l'objet étranger (7) sur la surface d'affichage (3) en fonction de la luminosité de détection et d'une luminosité de référence.

9. Système d'affichage par réflexion (1) selon la revendication 8, la luminosité de référence étant déterminée comme la luminosité totale de l'image d'affichage à afficher.

10. Véhicule automobile comprenant :
- un tableau de bord (7) entre un pare-brise (5) du véhicule automobile et une colonne de direction ;
- le système d'affichage par réflexion (1) selon l'une des revendications 1 à 9.

11. Procédé de détection d'un objet étranger (7) sur une unité d'affichage (2) d'un système d'affichage par réflexion (1), laquelle provoque une réflexion d'une image d'affichage sur un pare-brise (5) dans une zone oculaire (B) d'un occupant de véhicule, ledit procédé comprenant les étapes suivantes :
- afficher (S1) l'image d'affichage affichée sur la surface d'affichage (3) ;
- détecter (S2) l'image d'affichage affichée sur la surface d'affichage (3) par le biais d'un ensemble capteur de reconnaissance (10, 10a, 10b) ;
- déterminer (S3) une information de détection en fonction de l'image d'affichage affichée détectée,
- détecter (S4) la présence d'un objet étranger (7) sur la surface d'affichage (3) de l'unité d'affichage (2) en fonction de l'image d'affichage affichée et en fonction de l'information de détection ; et
- signaler (S5) un défaut de l'affichage lorsque la présence d'un objet étranger (7) est détectée sur la surface d'affichage (3) de l'unité d'affichage (2).
